# EUROPEAN PATENT APPLICATION

(11) **EP 1 939 316 A1**
(43) Date of publication of application: **02.07.2008**
(21) Application number: 07122214.5
(22) Date of filing: 04.12.2007
(51) Int. Cl.: C23C 4/08, C23C 4/10, C23C 4/12, C23C 28/00, C23C 4/02, C23C 4/18

(54) **Thermal barrier coating system and method for coating a component**

(30) Priority: 19.12.2006 US 612987
(71) Applicant: General Electric Company, Schenectady, NY 12345 (US)
(72) Inventor: Bucci, David Vincent, Simpsonville, SC 29681 (US)
(74) Representative: Szary, Anne Catherine

(57) **Abstract**

A thermal barrier coating system (12) for using with a component (10) is provided. The thermal barrier coating system (12) includes a roughened high-velocity oxy-fuel (HVOF) layer applied to an outer surface of the component. The thermal barrier coating system (12) further includes a ceramic coating (18) applied to the roughened HVOF layer, the ceramic coating including a plurality of dense vertically cracked (DVC) ceramic layers.

## Description

This invention relates generally to protective coating systems for substrates exposed to high temperatures and, more specifically, to a process for promoting adhesion between layers.

Modem gas turbine engines operate in a high temperature environment. Components in a gas turbine engine (e.g., turbine buckets, nozzles, airfoils and shrouds) often include thermal barrier coating (TBC) systems that protect the component, which enables the engine to operate more efficiently at higher temperatures. These TBC systems must have a low thermal conductivity, must strongly adhere to the component, and must remain adherent throughout many heating and cooling cycles. Coating systems capable of satisfying these requirements may include a metallic bond coating that adheres a thermal-insulating ceramic layer to the component. Metal oxides, such as zirconia (ZrO₂ partially or fully stabilized by yttria (Y₂O₃), magnesia (MgO) or other oxides, have been widely employed as the material for the thermal-insulating ceramic layer. The ceramic layer is typically deposited by air plasma spraying (APS), low-pressure plasma spraying (LPPS), or a physical vapor deposition (PVD) technique, such as electron beam physical vapor deposition (EBPVD) which yields a strain-tolerant columnar grain structure. The bond coats are typically formed of an oxidation-resistant diffusion coating such as a diffusion aluminide or platinum aluminide, or an oxidation-resistant alloy such as MCrAlY (where M is iron, cobalt and/or nickel). MCrAIY-type bond coats are deposited by physical or chemical vapor deposition techniques or by thermal spraying, e.g., APS, LPPS and high velocity oxy-fuel (HVOF), which includes deposition of the bond coat from a metal powder.

Presently, alternative methods for making TBC systems, particularly those that reduce the number of steps, time, and costs, are desired in the industry.

### BRIEF DESCRIPTION OF THE INVENTION

In one aspect, a method for coating a component is provided. The method includes applying a bond coating layer to an outer surface of the component using a high-velocity oxy-fuel (HVOF) process. The method also includes roughening the bond coating layer and applying at least one dense vertically cracked (DVC) ceramic layer to the roughened bond coating layer.

In another aspect, a thermal barrier coating system for using with a component is provided. The system includes a roughened high-velocity oxy-fuel (HVOF) layer applied to an outer surface of the component and a ceramic coating applied to the roughened HVOF layer. The ceramic coating includes a plurality of dense vertically cracked (DVC) ceramic layers.

In another aspect, a gas turbine engine component is provided. The gas turbine engine component includes an outer surface and a thermal barrier coating system applied to the outer surface. The thermal barrier coating system includes a roughened high-velocity oxy-fuel (HVOF) layer applied to the outer surface of the component and a ceramic coating applied to the roughened HVOF layer. The ceramic coating includes a plurality of dense vertically cracked (DVC) ceramic layers.

### BRIEF DESCRIPTION OF THE DRAWINGS

Figure 1 is a cross-sectional view of an exemplary thermal barrier coating system as applied to a substrate layer.
Figure 2 illustrates roughening a bond coating with a jet of fluid in order to form the thermal barrier coating system shown in Figure 1.
Figure 3 is an enlarged view of a ceramic coating used with the thermal barrier coating system shown in Figure 1.

### DETAILED DESCRIPTION OF THE INVENTION

Embodiments of the present invention are generally applicable to components that operate within environments characterized by relatively high temperatures, thermal stress, and thermal cycling. For example, the components can include high and low pressure turbine nozzles and blades, shrouds, combustor liners, and other hardware of gas turbine engines. While the advantages of this invention will be described with reference to gas turbine engine components, the embodiments of the present invention are generally applicable to any component that requires a thermal barrier coating system to protect the component from the environment it operates in. In the exemplary embodiment, the component is a metal alloy that is Ni-based, Ti-based, or Co-based.

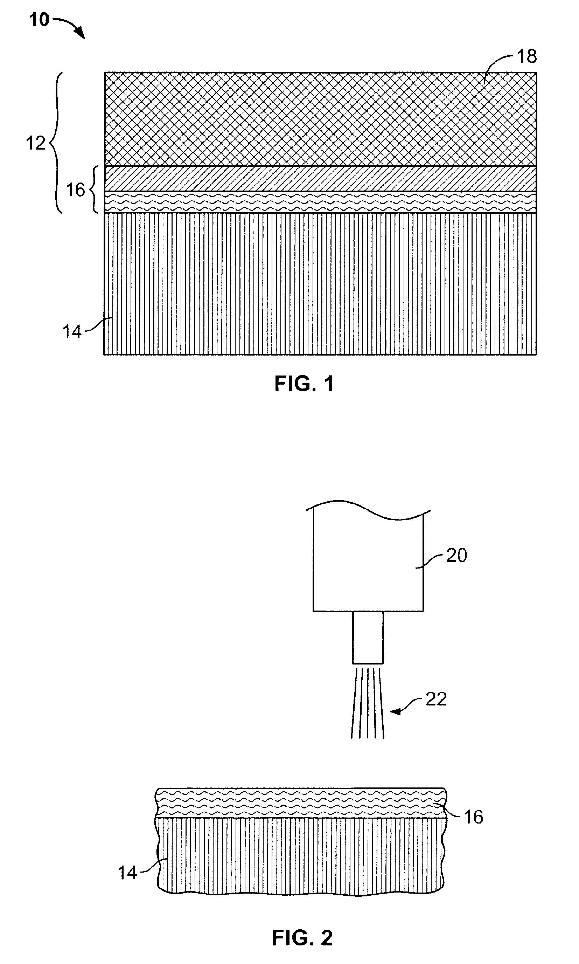

Figure 1 illustrates a component 10 including a thermal barrier coating (TBC) system 12. Component 10 includes an outer surface that acts as a substrate layer 14 for TBC system 12. Adjacent to substrate layer 14 is a roughened bond coating 16 that is roughened to a depth (as indicated). Ceramic coating 18 adheres to bond coating 16 and is formed by applying at least one dense vertically cracked (DVC) ceramic layer.

In making TBC system 12, a dense, bond coating 16 is first deposited onto the surface of substrate layer 14. Although those skilled in the art and guided by the teachings herein know that many methods exist for depositing a dense, bond coating 16 on the surface of substrate layer 14, in the exemplary embodiment, bond coating 16 may be applied using a high-velocity oxy-fuel spray (HVOF) process. Bond coating 16 may be any dense, metallic coating that is suitable for the HVOF process and is able to be roughened such that ceramic coating 18 may adhere to it. In the exemplary embodiment, bond coating 16 includes a MCrAlY composition; a Group IVB metal selected from the group consisting of hafnium, zirconium, or a combination of hafnium and at least one of zirconium and titanium; and a noble metal selected from the group consisting of palladium, platinum, rhodium, ruthenium or a combination thereof. M is a metal selected from the group consisting of iron, cobalt, nickel, or a combination thereof. In another embodiment, the composition further includes a Group IVA element, specifically silicon and/or germanium.

In another embodiment, a coating composition includes about 16 to about 60 weight percent cobalt, about 20 to about 45 weight percent nickel, about 10 to about 30 weight percent chromium, about 4 to about 16 weight percent aluminum, about 0.05 to about 3 weight percent yttrium, about 0.05 to about 3 weight percent hafnium, about 0.1 to about 15 weight percent palladium, and about 0.1 to about 5 weight percent silicon, wherein the weight percentages are based on the total weight of the coating composition.

In another embodiment, bond coating 16 includes about 30 to about 70 weight percent cobalt, about 25 to about 70 weight percent nickel, about 15 to about 45 weight percent chromium, about 4 to about 15 weight percent aluminum, about 0.05 to about 3 weight percent yttrium, about 0.05 to about 3 weight percent hafnium, about 0.1 to about 15 weight percent palladium, and about 0.1 to about 5 weight percent silicon.

In other embodiments, bond coating 16 can include other alloying elements.

In the HVOF process, a fuel gas and oxygen are used to create a combustion flame from about 2500°C to 3100°C. The combustion occurs in a chamber at a very high pressure with a supersonic gas stream forcing the powdered material of bond coating 16 through a small-diameter barrel at very high particle velocities. The HVOF process results in an extremely dense, well-bonded coating. Typically, HVOF coatings can be formed nearly 100% dense, with a porosity of about 0.5%. The HVOF process forms a bond between the bond coating 16 material and substrate layer 14 that occurs primarily through mechanical adhesion at a bonding interface. Alternatively, after the HVOF coating is applied, bond coating 16 is diffusion heat treated at a temperature greater than 1950 °F. More specifically, in the exemplary embodiment, the diffusion heat treatment occurs at a temperature from about 1975-2050 °F.

Known TBC systems use intermediate bond coatings to facilitate the bonding between bond coating 16 and ceramic coating 18. Embodiments of the present invention eliminate the need for such a layer and reduce the time, extra steps, and costs needed to apply the bond coatings.

After bond coating 16 has sufficiently bonded with substrate layer 14, a high-pressure fluid-jet may be directed toward bond coating 16 to roughen the surface. Roughening the surface of bond coating 16 facilitates mechanical interlocking with ceramic coating 18 and enhances the spallation life of TBC system 12. While various fluids could be used, in one embodiment jet 22 is a high-pressure water-jet (HPWJ). In the exemplary embodiment, no media is added to the water. In other embodiments, an abrasive media is added to the water, such as garnet or alumina.

As shown in Figure 2, in order to roughen bond coating 16, a jet nozzle 20 may be connected to a suitable waterjet apparatus and delivers a jet 22 toward the surface of bond coating 16. Jet 22 may be oriented such that it forms an angle of about 30° to 90° with respect to the surface of bond coating 16. In the exemplary embodiment, jet 22 is oriented such that it forms an angle of about 60° to 90° with respect to the surface of bond coating 16. The water is pressurized such that jet 22 may create a suitable roughness of the outer layer of bond coating 18 in order to facilitate the adhesion and mechanical bonding between bond coating 16 and ceramic coating 18. The water pressure may be from about 25,000 psi to about 75,000 psi. In the exemplary embodiment, the water is pressurized to about 50,000 psi. Jet nozzle 20 may be positioned a distance from the surface of bond coating 16 in the range from .5 in. to about 3 in., although other distances may be suitable. Jet 22 may include any suitable nozzle, such as a round jet nozzle or a sand style nozzle.

A suitable traversal rate for jet 22 is from about 2.5 to about 10 inches per minute (about 6 to about 25 cm/minute). Movement of jet 22 relative to the component surface may be continuous and more than one pass of jet 22 may be necessary to roughen bond coating 16. In order to maintain each of the above parameters while spraying bond coating 16 on a component that has a complex geometry, jet nozzle 20 may be mounted to a robotic arm or other computer-controlled equipment that has preprogrammed movement based on geometric data acquired and stored for the particular component being processed. With the data, the robotic arm can be controlled such that jet nozzle 20 maintains the desired orientation and distance from the component surface, as well as the speed at which jet 22 traverses the component surface.

The surface of bond coating 16 must have a suitable roughness to facilitate the adhesion and mechanical bonding between bond coating 16 and ceramic coating 18. A roughness average (Rₐ) of the surface of bond coating 16 may be from about 200 microinches to 500 microinches. In the exemplary embodiment, the Rₐ of the surface of bond coating 16 is about 350 microinches.

After bond coating 16 is roughened, ceramic coating 18 may be applied. A variety of ceramic coating material may be used, in particular, those that have desirable thermal cycle fatigue properties and can be readily deposited by plasma spray, flame spray and vapor deposition techniques. For example, ceramic coating 18 may be yttria-stabilized zirconia; yttria, nonstabilized zirconia; or zirconia stabilized by ceria (CeO₂), scandia (Sc₂O₃), Magnesia (MgO) or other oxides; or any other suitable low-conductivity material. In the exemplary embodiment, the material for ceramic coating 18 is an yttria-stabilized zirconia (YSZ), with about 4 to about 8 weight percent yttria. In the exemplary embodiment, multiple layers of the material are applied to form ceramic coating 18 such that the thickness is sufficient to provide thermal protection for underlying bond coating 16 and/or substrate layer 14. For example, the thickness can be from about .005 to about .100 inches. More specifically, in the exemplary embodiment, the thickness is from about .010 to about .040 inches.

The material for ceramic coating 18 may be deposited using various deposition methods. In the exemplary embodiment, the material is deposited using the air plasma spray (APS) method in which a plasma-spray torch induces a heated gaspropelled spray of the powdered oxide material such that the oxide powder particles become momentarily molten. The spray of the molten oxide particles is then directed onto the receiving surface or substrate, such as roughened bond coating 16. This process may be repeated in order to achieve the desired thickness. In the exemplary embodiment, the process may be repeated 20-60 times. The torch current may be from about 500 to about 900 A, and the distance of the plasma spray flame to the surface of roughened bond coating 16 is approximately 3-5 inches. In the exemplary embodiment, the torch current is about 700 A.

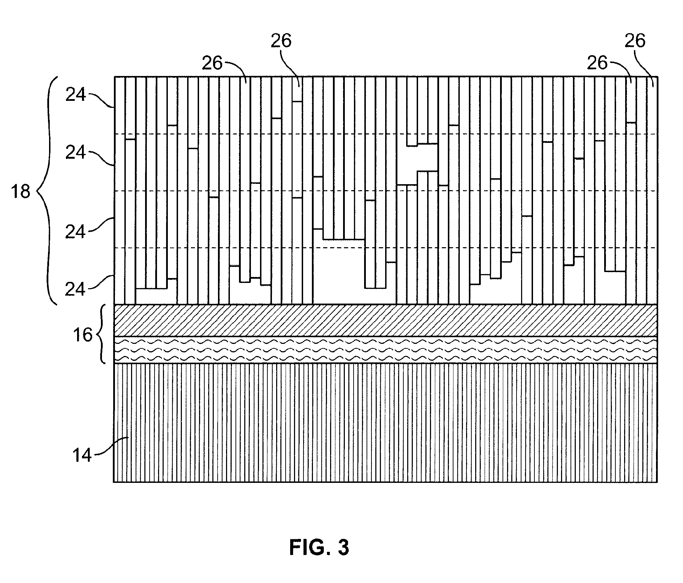

In the exemplary embodiment, ceramic coating 18 is applied using the dense vertically cracked (DVC) method, which reduces the tendency for spalling within the coating and increases the thermal fatigue resistance. The DVC method may include the use of APS methods discussed above. Figure 3 shows ceramic coating 18 as applied to bond coating 16 using the DVC method. The DVC method includes thermally depositing powders of the ceramic coating material onto bond coating 16 to apply a first monolayer 24 having at least two superimposed splats of the deposited powders on bond coating 16 in which the temperature of a subsequent deposited splat is higher than the temperature of a previously deposited splat. Monolayer 24 may be cooled and solidified such that a density of monolayer 24 is at least 88% of the theoretical density and wherein a plurality of vertical cracks are produced in monolayer 24 due to shrinkage of the deposited splats. As shown in Figure 3, the steps of depositing and cooling and solidifying are repeated to produce an overall coated layer (e.g., ceramic coating 18) in which each spray passing adds another monolayer 24. The plurality of passes may induce vertical cracks through the splats wherein at least 70% of the vertical cracks in each monolayer are aligned with vertical cracks in an adjacent monolayer to form vertical macrocracks in which there are at least 20 vertical macrocracks per linear inch measured in a line parallel to the surface of the substrate. Although ceramic coating 18 may be formed by applying multiple monolayers 24, ceramic coating 18 forms a coherent, continuous columnar grain structure, wherein at least some columnar grains extend from, to, or near the interface with bond coating 16. The roughened surface of bond coating 16 may enable the vertical cracks to adhere to bond coating 16 better than if the surface was not roughened. In the exemplary embodiment, the vertical cracks of ceramic coating 18 extend from about 50% to about 100% the depth of ceramic coating 18.

Generally, in order to improve thermal cycle fatigue of the coating 18, more vertical cracks and/or fewer horizontal cracks are desired. When using YSZ as the coating material, ceramic coating 18 has a density greater than 88% of the theoretical density, and includes a plurality of vertical macrocracks substantially homogeneously dispersed throughout coating 18 in which a cross-section area of coating 18 is normal to the surface of substrate layer 14 (or bond coating 16). In the exemplary embodiment, ceramic coating 18 includes a plurality of vertical macrocracks, such as 20 to 200 vertical macrocracks per linear inch measured in a line parallel to the surface of the substrate and in a plane perpendicular to its substrate.

In one embodiment, ceramic coating 18 forms a coherent, continuous columnar grain structure, wherein at least some columnar grains extend from, to, or near the interface with bond coating 16. The degree of columnarity is directly related to the quantity and distribution of columnar grains extending both within and between individual monolayers 24. In general, as the degree of columnarity increases the amount and/or degree of horizontal cracking within ceramic coating 18 is reduced. The degree of columnarity may be controlled by controlling the temperature of the deposition surface during the deposition process (i.e. once above a threshold temperature, increasing the temperature increases the degree of columnarity).

Figure 3 illustrates a coherent, continuous columnar grain microstructure. The microstructure is continuous in that each monolayer 24 includes a plurality of columnar grains 26, which are generally oriented vertically and extend through all, or substantially all, of the thickness of the layer. The microstructure is coherent because this columnar growth extends between layers, in that at least some of the plurality of columnar grains existing within a subsequently deposited layer are micro-welded to and extend from columnar grains contained within the layer upon which it is deposited.

In ceramic coating 18 including YSZ with a composition of about 8 weight percent yttria, a coherent, continuous columnar microstructure begins to develop at a deposition surface temperature of about 300°C, which is about 0.2Tₘ, where Tₘ is the absolute melting temperature of zirconia. A more coherent, continuous columnar structure occurs when the deposition surface temperature is higher, for example, 0.4 Tₘ. With other ceramic materials, the minimum deposition surface temperature at which a coherent, continuous columnar structure may be created would be expected to vary depending on the ceramic material selected. This is based on factors that affect micro-welding, such as the crystal structure, melting temperature and heat capacity of the ceramic material. Furthermore, the degree of columnarity for other materials used for ceramic coating 18 is also expected to increase with increasing deposition surface temperature.

In one embodiment, a thermal barrier coating system for using with a component is provided. The system includes a roughened high-velocity oxy-fuel (HVOF) layer applied to an outer surface of the component and a ceramic coating applied to the roughened HVOF layer. The ceramic coating includes a plurality of dense vertically cracked (DVC) ceramic layers.

In one embodiment, a gas turbine engine component is provided. The gas turbine engine component includes an outer surface and a thermal barrier coating system applied to the outer surface. The thermal barrier coating system includes a roughened high-velocity oxy-fuel (HVOF) layer applied to the outer surface of the component and a ceramic coating applied to the roughened HVOF layer. The ceramic coating includes a plurality of dense vertically cracked (DVC) ceramic layers.

Described herein is a method for coating a substrate layer with a thermal barrier coating system that may be utilized on a wide variety of engine components. The method promotes adhesion between two coatings thus enabling the thermal barrier system to protect a component in an environment that can include at least one of high temperatures, thermal stress, and thermal cycling. The method and systems described herein can lead to improved engine performance and a longer life span for the components.

Exemplary embodiments of a thermal barrier coating system, a gas turbine engine component, and a method for coating a component are described above in detail. The system, component, and method illustrated are not limited to the specific embodiments described herein, but rather, parts and steps of each may be utilized independently and separately from other parts and steps described herein.

While the invention has been described in terms of various specific embodiments, those skilled in the art will recognize that the invention can be practiced with modification within the scope of the claims.

## Claims

1. A thermal barrier coating system (12) for using with a component (10), said system comprising:
a roughened high-velocity oxy-fuel (HVOF) layer applied to an outer surface of the component; and
a ceramic coating (18) applied to said roughened HVOF layer, said ceramic coating comprising a plurality of dense vertically cracked (DVC) ceramic layers.

2. A thermal barrier coating system (12) in accordance with Claim 1 wherein said roughened HVOF layer comprises MCrAIY, wherein M is Fe, Co, Ni, or a combination thereof.

3. A thermal barrier coating system (12) in accordance with Claim 1 or Claim 2 wherein said roughened HVOF layer comprises a roughened average (Rₐ) from about 250 microinches to 350 microinches.

4. A thermal barrier coating system (12) in accordance with any preceding Claim wherein said plurality of DVC ceramic layers form a coherent, continuous columnar grain structure.

5. A thermal barrier coating system (12) in accordance with any preceding Claim wherein each of said plurality of DVC ceramic layers comprises yttria-stabilized zirconia.

6. A thermal barrier coating system (12) in accordance with any preceding Claim wherein said component (10) comprises an alloy that is Ni-based, Ti-based, or Co-based.

7. A gas turbine engine component (10) comprising:
an outer surface; and
a thermal barrier coating system (12) applied to said outer surface, said coating system comprising a roughened high-velocity oxy-fuel (HVOF) layer applied to said outer surface of said component, and a ceramic coating (18) applied to said roughened HVOF layer, said ceramic coating comprising a plurality of dense vertically cracked (DVC) ceramic layers.

8. A gas turbine engine component (10) in accordance with Claim 7 wherein said roughened HVOF layer comprises MCrAlY, wherein M is Fe, Co, Ni, or a combination thereof.

9. A gas turbine engine component (10) in accordance with Claim 7 or Claim 8 wherein said roughened HVOF layer comprises a roughened average (Rₐ) from about 250 microinches to 350 microinches.

10. A gas turbine engine component (10) in accordance with any one of Claims 7 to 9 wherein said plurality of DVC ceramic layers form a coherent, continuous columnar grain structure.
